# EUROPEAN PATENT SPECIFICATION

(11) **EP 1 532 075 B1**
(45) Date of publication and mention of the grant of the patent: **19.06.2019**
(21) Application number: 03790908.2
(22) Date of filing: 19.08.2003
(51) Int. Cl.: C01B 39/36, C01B 39/38

(54) **PROCESS FOR THE PREPARATION OF DOPED PENTASIL-TYPE ZEOLITES USING DOPED FAUJASITE SEEDS**
VERFAHREN ZUR HERSTELLUNG VON DOTIERTEN ZEOLITHEN DES PENTASIL-TYPS MITTELS DOTIERTEN KEIMEN DES FAUJASIT-TYPS
PROCEDE DE PREPARATION DE ZEOLITHES DOPEES DE TYPE PENTASIL AU MOYEN DE GERMES DE FAUJASITE DOPES

(30) Priority: 28.08.2002 US 406491 P; 24.10.2002 EP 02079435
(43) Date of publication of application: 25.05.2005
(73) Proprietor: Albemarle Netherlands B.V., 3818 LH Amersfoort (NL)
(72) Inventor: RAO, Rajeev, S., Houston, TX 77056 (US)
(74) Representative: Hoyng Rokh Monegier LLP
(86) International application number: PCT/EP2003/009184
(87) International publication number: WO 2004/020336

(56) References cited:
- EP-A- 0 550 917
- US-A- 4 650 655
- DATABASE CA [Online] CHEMICAL ABSTRACTS SERVICE, COLUMBUS, OHIO, US; SU, XINGTIAN ET AL: "High-silicon rare earth-containing zeolites having five-member ring structure and their synthesis" retrieved from STN Database accession no. 116:8488 CA XP002260909 & CN 1 052 290 A (CHINA PETROCHEMICAL CORP., BEIJING, PEOP. REP. CHINA) 19 June 1991 (1991-06-19)
- DATABASE CA [Online] CHEMICAL ABSTRACTS SERVICE, COLUMBUS, OHIO, US; WANG, XIQING ET AL: "Optimal-oriented growth of MFI -type zeolite crystals" retrieved from STN Database accession no. 137:313100 CA XP002260910 & CN 1 332 114 A (FUDAN UNIVERSITY, PEOP. REP. CHINA) 23 January 2002 (2002-01-23)
- DATABASE CA [Online] CHEMICAL ABSTRACTS SERVICE, COLUMBUS, OHIO, US; WANG, DIANZHONG ET AL: "Synthesis of crystalline silica-based molecular sieves" retrieved from STN Database accession no. 132:139393 CA XP002260911 & CN 1 187 460 A (SINOPEC, PEOP. REP. CHINA;RESEARCH INSTITUTE OF PETROLEUM PROCESSING,) 15 July 1998 (1998-07-15)

## Description

The present invention relates to the preparation of doped pentasil-type zeolites using doped faujasite seeds.

US 5,232,675 discloses a process for the preparation of rare earth metal (RE)-doped pentasil-type zeolites using RE-doped faujasite seeds. The process involves the steps of dispersing the RE-doped faujasite seeds in a gel system comprising water glass, aluminium salt, inorganic acid, and water, and crystallising the resulting mixture at a temparture of 30-200°C for 12-60 hours.

The present invention provides a process for the preparation of rare earth metal-doped pentasil-type zeolites which requires a shorter crystallisation time than the prior art process.

The process according to the invention involves the steps of:
a) preparing an aqueous precursor mixture comprising a silicon source, an aluminium source, doped faujasite seeds, and another type of seeding material comprising pentasil-type seeds, and
b) thermally treating the precursor mixture to form a doped pentasil-type zeolite.

The process requires the use of doped faujasite seeds. Examples of faujasite seeds are zeolite X and (ultrastabilised) zeolite Y.

The term "doped faujasite seeds" refers to faujasite seeds containing an additive (also called dopant). Suitable dopants include compounds comprising rare earth metals such as Ce or La, alkaline earth metals such as Mg, Ca, and Ba, transition metals such as Zr, Mn, Fe, Ti, Cu, Ni, Zn, Mo, W, V, and Sn, actinides, noble metals such as Pt and Pd, gallium, boron, and/or phosphorus. Suitable compounds are the oxides, hydroxides, carbonates, hydroxy-carbonates, chlorides, nitrates, sulfates, and phosphates of the above elements.

The dopant is present in the faujasite seed in amounts of 1-50 wt%, preferably 1-25 wt%, more preferably 5-20 wt%, and most preferably 10-20 wt%, calculated as oxide and based on the dry weight of the doped faujasite seeds.

Doped faujasite seeds can be prepared by, e.g., ion-exchange, impregnation, and solid state exchange of the faujasite seeds with the dopant. These procedures are well-known to the skilled person.

Furthermore, at least one other type of seeding material is used in the process.

The term "other type of seeding material" refers to seeds other than doped fausite seeds and comprises pentasil-type seeds (e.g. ZSM-5 seeds or ZSM-11 seeds).

If desired, the other type of seeding material is doped. Suitable dopants include compounds comprising rare earth metals such as Ce and La, alkaline earth metals such as Mg, Ca, and Ba, transition metals such as Mn, Fe, Ti, Zr, Cu, Ni, Zn, Mo, W, V, and Sn, actinides, noble metals such as Pt and Pd, gallium, boron, and/or phosphorus.

The optional dopant(s) present in the other type of seeding material can be the same as or different from the dopant(s) present in the doped faujasite seeds.

The pentasil-type zeolite resulting from the process according to the invention preferably has a SiO₂/Al₂O₃ ratio (SAR) of 25-90. Typical examples of pentasil-type zeolites are ZSM-5 and ZSM-11. The doped pentasil-type zeolite preferably contains 0.1-10 wt%, more preferably 0.1-3 wt%, and most preferably 0.5-2.5 wt% of dopant, calculated as oxide and based on the total dry weight of the doped zeolite.

The first step of the process according to the invention involves the preparation of an aqueous precursor mixture comprising a silicon source, an aluminium source, doped faujasite seeds, and at least one other type of seeding material.

Suitable aluminium sources include aluminium salts, such as Al₂(SO₄)₃, AlCl₃, AlPO₄, Al₂(HPO₄)₃, and Al(H₂PO₄)₃, and water-insoluble aluminium compounds, e.g., aluminium trihydrate (Al(OH)₃) such as gibbsite and bauxite ore concentrate (BOC), thermally treated aluminium trihydrate such as flash-calcined aluminium trihydrate, (pseudo)boehmite, aluminium chlorohydrol, aluminium nitrohydrol. Also mixtures of one or more of these aluminium sources can be used.
Alternatively, doped aluminium sources can be used. Examples of such doped aluminium sources are doped (pseudo)boehmite and doped aluminium trihydrate.
Doped aluminium sources can be obtained by preparing the aluminium source in the presence of a dopant, impregnating the aluminium source with a dopant, or ion-exchanging the aluminium source with a dopant.
Doped (pseudo)boehmite for instance can be prepared by hydrolysis of aluminium alkoxide in the presence of a dopant, hydrolysis and precipitation of aluminium salts in the presence of a dopant, or by aging a slurry of (thermally treated) aluminium trihydrate, amorphous gel alumina, or less crystalline (pseudo)boehmite in the presence of a dopant. For more information concerning the preparation of doped (pseudo)boehmite reference is made to International Patent Application Nos. WO 01/12551, WO 01/12552, and WO 01/12554.

Suitable silicon sources include sodium silicate, sodium meta-silicate, stabilised silica sols, silica gels, polysilicic acid, tetra ethylortho silicate, fumed silicas, precipitated silicas, and mixtures thereof.
Also doped silicon sources can be used. Doped silicon sources can be obtained by preparing the silicon source in the presence of a dopant, impregnating the silicon source with a dopant, or ion-exchanging the silicon source with a dopant. Doped silica sol for instance can be prepared by preparing a silica sol from water glass and acid (e.g. sulfuric acid) and exchanging the sodium ions with the desired dopant. Alternatively, water glass, acid (e.g. sulfuric acid), and dopant are coprecipitated to form a doped silica sol.

Suitable dopants for the aluminium and/or the silicon source include compounds comprising rare earth metals such as Ce and La, alkaline earth metals such as Mg, Ca, and Ba, transition metals such as Mn, Fe, Ti, Zr, Cu, Ni, Zn, Mo, W, V, and Sn, actinides, noble metals such as Pt and Pd, gallium, boron, and/or phosphorus.
The optional dopant(s) present in the silicon and/or the aluminium source and the dopant in the doped faujasite seeds can be the same or different.

The precursor mixture preferably contains 0.1-10 wt%, more preferably 0.5-10 wt% of doped faujasite seeds and preferably 1-10 wt%, more preferably 1-5 wt% of the other type of seeding material, based on dry weight of the precursor mixture.
The amounts of silicon and aluminium source present in the precursor mixture depend on the desired SAR of the resulting doped pentasil-type zeolite.

If so desired, several other compounds may be added to the precursor mixture, such as metal (hydr)oxides, sols, gels, pore regulating agents (sugars, surfactants), clays, metal salts, acids, bases, etc.
Furthermore, it is possible to mill the precursor mixture.

The second step of the process involves thermal treatment of the precursor mixture at temperatures ranging from 130 to 200°C, preferably 150-180°C, for 3-60 hrs, preferably 1-11 hrs, and most preferably 3-8 hrs. During this step, the doped pentasil-type zeolite is formed by crystallisation.
The thermal treatment can be conducted in one or more reaction vessels. If more than one such vessel is used, the process is preferably conducted in a continuous mode. Using more than one reaction vessel further makes it possible to prepare the aqueous precursor mixture either by adding all ingredients to the first vessel, or by dividing the addition of (part of the total amount of) the ingredients over the reaction vessels.

The precursor mixture of step a) or the doped pentasil-type zeolite resulting from step b) can be shaped to form shaped bodies. Suitable shaping methods include spray-drying, pelletising, extrusion (optionally combined with kneading), beading, or any other conventional shaping method used in the catalyst and absorbent fields or combinations thereof.
When shaping the precursor mixture of step a), the amount of liquid present in the precursor mixture should be adapted to the specific shaping step to be conducted. It may be advisable to partially remove the liquid used in the precursor mixture and/or to add an additional or another liquid, and/or to change the pH of the precursor mixture to make the mixture gellable and thus suitable for shaping. Additives commonly used in the different shaping methods, e.g., extrusion additives, may be added to the precursor mixture used for shaping.

If so desired, the resulting doped pentasil-type zeolite may be calcined and optionally ion-exchanged.

The doped pentasil-type zeolite can be used in or as a catalyst composition or catalyst additive composition for, e.g. hydrogenation, dehydrogenation, catalytic cracking (FCC), and alkylation reactions.

### EXAMPLES

### Comparative Example 1

A precursor mixture was prepared by combining 2,007 g water glass, 208 g aluminium sulfate, 141 g of 98% H₂SO₄, 2,466 g water, and 45 g Y-zeolite seeds doped with 12 wt% RE (calculated as oxide).

The precursor mixture was treated at 170°C at autogeneous pressure for 12 hours. The characteristics of the resulting pentasil-type zeolite are presented in Table 1 below.

This Example shows that Y zeolite as such can act as a seed for the nucleation of pentasil-type zeolites.

### Comparative Example 2

Comparative Example 1 was repeated, except that the precursor mixture was treated at 170°C for 6 hrs. The results are shown in Table 1 below.

This Example indicates that under these reaction conditions a crystallisation time of 6 hrs is inadequate for the formation of significant amounts of pentasil-type zeolite.

### Example 3

Comparative Example 2 was repeated, except that, in addition to the other compounds, 6.5 g of ZSM-5 seeds were added to the precursor mixture.

The characteristics of the resulting pentasil-type zeolite are also presented in Table 1. This Example clearly shows that the addition of another type of seed accelerates the crystallisation. So, in the presence of this seed, a crystallisation time of 6 hrs is adequate.

**Table 1**

| | Comp. Example 1 | Comp. Example 2 | Example 3 |
|---|---|---|---|
| BET-surface area (m²/g) | 316 | 37 | 320 |
| Micropore volume (ml/g) | 0.1227 | 0.0116 | 0.1193 |
| % ZSM-5¹ | 85 | 6 | 83 |

| | | | |
|---|---|---|---|
| ¹ The % ZSM-5 refers to the relative crystallinity of the sample, which was determined by X-ray diffraction using copper K-alpha radiation. The sample's total net integrated intensity of the reflections within the 2θ-range of 20-25° was determined and compared with that of a monoclinic ZSM-5. | | | |

## Claims

1. Process for the preparation of doped pentasil-type zeolite, comprising the steps of:
a) preparing an aqueous precursor mixture comprising a silicon source, an aluminium source, doped faujasite seeds, and another type of seeding material comprising pentasil-type seeds, and
b) thermally treating the precursor mixture to form a doped pentasil-type zeolite.

2. A process according to any one of the preceding claims wherein the faujasite seeds are doped with a dopant selected from the group consisting of Ce, La, Mn, Fe, Ti, Zr, Cu, Ni, Zn, Mo, W, V, Sn, Pt, Pd, Ga, B, and P.

3. A process according to any one of the preceding claims wherein the silicon source is selected from the group consisting of sodium silicate, sodium meta-silicate, stabilised silica sols, silica gels, polysilicic acid, tetra ethylortho silicate, fumed silicas, precipitated silicas, and mixtures thereof.

4. A process according to any one of the preceding claims wherein the aluminium source is selected from the group consisting of Al₂(SO₄)₃, AlCl₃, AlPO₄, Al₂(HPO₄)₃, Al(H₂PO₄)₃, aluminium trihydrate (Al(OH)₃), thermally treated aluminium trihydrate, (pseudo)boehmite, aluminium chlorohydrol, aluminium nitrohydrol, and mixtures thereof.

5. A process according to any one of the preceding claims wherein step b) is performed at a temperature in the range 150-180°C.

6. A process according to any one of the preceding claims wherein step b) is performed for 3-8 hours.

7. A process according to any one of the preceding claims wherein a shaping step is performed between steps a) and b).

## Patentansprüche

1. Verfahren zum Herstellen eines dotierten Pentasiltyp-Zeolith, das die Schritte umfasst:
a) Herstellen einer wässrigen Vorläufermischung, umfassend eine Siliciumquelle, eine Aluminiumquelle, dotierte Faujasitimpfgüter und einen weiteren Impfmaterialtyp, umfassend Pentasiltyp-Impfgüter, und
b) Wärmebehandeln der Vorläufermischung, um einen dotierten Pentasiltyp-Zeolith zu bilden.

2. Verfahren nach einem der vorstehenden Ansprüche, wobei die Faujasitimpfgüter mit einem Dotiermittel dotiert sind, das aus der Gruppe ausgewählt ist, bestehend aus Ce, La, Mn, Fe, Ti, Zr, Cu, Ni, Zn, Mo, W, V, Sn, Pt, Pd, Ga, B und P.

3. Verfahren nach einem der vorstehenden Ansprüche, wobei die Siliciumquelle aus der Gruppe ausgewählt ist, bestehend aus Natriumsilikat, Natriummetasilikat, stabilisierten Siliciumdioxidsolen, Siliciumdioxidgelen, Polykieselsäure, Tetraethylorthosilikat, pyrogenen Siliciumdioxiden, präzipitierten Siliciumdioxiden und Mischungen davon.

4. Verfahren nach einem der vorstehenden Ansprüche, wobei die Aluminiumquelle aus der Gruppe ausgewählt ist, bestehend aus Al₂(SO₄)₃, AlCl₃, AlPO₄, Al₂(HPO₄)₃, Al(H₂PO₄)₃, Aluminiumtrihydrat (Al(OH)₃), wärmebehandeltem Aluminiumtrihydrat, (Pseudo-)Böhmit, Aluminiumchlorhydrol, Aluminiumnitrohydrol und Mischungen davon.

5. Verfahren nach einem der vorstehenden Ansprüche, wobei Schritt b) bei einer Temperatur im Bereich von 150 bis 180 °C durchgeführt wird.

6. Verfahren nach einem der vorstehenden Ansprüche, wobei Schritt b) für 3 bis 8 Stunden durchgeführt wird.

7. Verfahren nach einem der vorstehenden Ansprüche, wobei ein Formgebungsschritt zwischen Schritt a) und b) durchgeführt wird.

## Revendications

1. Procédé pour la préparation d'une zéolite de type pentasil dopé, comprenant les étapes de :
a) préparer un mélange précurseur aqueux comprenant une source de silicium, une source d'aluminium, des germes de faujasite dopés et un autre type de matière d'ensemencement comprenant des germes de type pentasil ; et
b) traiter thermiquement le mélange précurseur pour former une zéolite de type pentasil dopé.

2. Procédé selon l'une quelconque des revendications précédentes, dans lequel les germes de faujasite sont dopés par un dopant choisi dans le groupe consistant en Ce, La, Mn, Fe, Ti, Zr, Cu, Ni, Zn, Mo, W, V, Sn, Pt, Pd, Ga, B et P.

3. Procédé selon l'une quelconque des revendications précédentes, dans lequel la source de silicium est choisie dans le groupe consistant en le silicate de sodium, le métasilicate de sodium, les sols de silice stabilisés, les gels de silice, l'acide polysilicique, le tétra éthyl ortho silicate, les silices fumées, les silices précipitées et leurs mélanges.

4. Procédé selon l'une quelconque des revendications précédentes, dans lequel la source d'aluminium est choisie dans le groupe consistant en Al₂(SO₄)₃, AlCl₃, AlPO₄, Al₂(HPO₄)₃, Al(H₂PO₄)₃, le trihydrate d'aluminium (Al(OH)₃), le trihydrate d'aluminium traité thermiquement, la (pseudo)boehmite, l'aluminium chlorohydrol, l'aluminium nitrohydrol et leurs mélanges.

5. Procédé selon l'une quelconque des revendications précédentes, dans lequel l'étape b) est effectuée à une température se situant dans la plage de 150-180°C.

6. Procédé selon l'une quelconque des revendications précédentes, dans lequel l'étape b) est effectuée pendant 3-8 heures.

7. Procédé selon l'une quelconque des revendications précédentes, dans lequel une étape de façonnage est effectuée entre les étapes a) et b).
